# EUROPEAN PATENT APPLICATION

(11) **EP 4 447 167 A1**
(43) Date of publication of application: **16.10.2024**
(21) Application number: 24168795.3
(22) Date of filing: 05.04.2024
(51) Int. Cl.: H01M 4/62, H01M 4/133, H01M 4/134, H01M 4/36, H01M 4/38, H01M 10/0525, H01M 50/116, H01M 4/02

(54) **SECONDARY BATTERY AND ELECTRONIC APPARATUS**

(30) Priority: 06.04.2023 CN 202310361113
(71) Applicant: Ningde Amperex Technology Ltd., Ningde City, Fujian 352100 (CN)
(72) Inventor: WANG, Weidong, Ningde City, Fujian 352100 (CN)
(74) Representative: Icosa

(57) **Abstract**

A secondary battery includes a metal housing and an electrode assembly arranged inside the metal housing. The electrode assembly includes a negative electrode. The negative electrode includes a negative electrode material layer. The negative electrode material layer includes a binder. The binder includes a first binder and a second binder, where the first binder is selected from styrene-butadiene rubber polymers and the second binder is selected from polyacrylic acid polymers. A weight-average molecular weight of the first binder is 40,000 to 300,000, and a weight-average molecular weight of the second binder is 400,000 to 2,000,000. A mass percentage of the first binder is 10% to 90% based on a mass of the binder. The secondary battery has both high energy density and high cycling performance at a high rate.

## Description

### TECHNICAL FIELD

This application relates to the field of energy storage. Specifically, this application relates to a secondary battery and an electronic apparatus.

### BACKGROUND

As power of mobile phones, computers, electric tools, electric vehicles, and other electric devices increases continuously, increasingly high requirements are imposed on energy density of lithium-ion batteries. Increasing capacity of a negative electrode is the most direct and effective way to improve energy density of a lithium-ion battery. Currently, a high-capacity silicon negative electrode is typically used to improve capacity of a negative electrode. However, swelling of a silicon-based material in a cycling procedure leads to a series of problems such as cycling degradation and film stripping. To solve these problems, a coating binder such as a polyacrylic acid (PAA) binder needs to be introduced to solve the problems caused by swelling of a silicon-based material. However, applying an excessive amount of the coating binder on graphite particles in a mixed negative electrode weakens the lithium ion transmission capacity of the graphite particles, which decreases speeds of lithium deintercalation or intercalation at the negative electrode, making a lithium-ion battery unable to be applied to a device discharged at a high rate.

### SUMMARY

In view of the foregoing problems existing in the prior art, this application provides a secondary battery and an electronic apparatus including the secondary battery. In this application, considering that a metal housing structure of a secondary battery constrains swelling of a silicon-based material to some extent, a type and a percentage of a binder in a negative electrode are adjusted, solving problems caused by swelling of a silicon-based material in a mixed silicon negative electrode and improving the capability of lithium deintercalation or intercalation at the negative electrode. In this way, the secondary battery has both high energy density and high cycling performance at a high rate.

A first aspect of this application provides a secondary battery. The secondary battery includes a metal housing and an electrode assembly arranged inside the metal housing. The electrode assembly includes a negative electrode. The negative electrode includes a negative electrode material layer. The negative electrode material layer includes a binder. The binder includes a first binder and a second binder, where the first binder is selected from styrene-butadiene rubber polymers and the second binder is selected from polyacrylic acid polymers. A weight-average molecular weight of the first binder is 40,000 to 300,000, and a weight-average molecular weight of the second binder is 400,000 to 2,000,000. A mass percentage of the first binder is 10% to 90% based on a mass of the binder. Through research, the inventor of this application has found that in a secondary battery such as a cylindrical battery constrained by a metal housing, the metal housing naturally suppresses swelling of silicon in a cycling procedure. On this basis, some styrene-butadiene rubber point contact binder can be used to replace a part of the coating binder based on a percentage of a silicon-based material, so as to reduce the amount of the coating binder applied on graphite particles, which reduces resistance of the binder against lithium ion transmission, thereby improving speeds of lithium deintercalation or intercalation at the negative electrode. In this way, cycling performance of the secondary battery at a high rate is effectively improved while maintaining its energy density.

In some embodiments, the mass percentage of the first binder is 20% to 80% based on the mass of the binder. When the percentage of the first binder is too low, the amount of the binder applied on the graphite particles cannot be effectively reduced, speeds of lithium deintercalation or intercalation at the negative electrode are too low, and cycling performance of the secondary battery at a high rate is relatively low. When the percentage of the first binder is too high, the silicon-based material may swell more during a cycling procedure, which may also affect the cycling performance of the secondary battery. In some embodiments, the mass percentage of the first binder is 20% to 80%. In some embodiments, the mass percentage of the first binder is 40% to 60%. In some embodiments, the weight-average molecular weight of the first binder is 80,000 to 100,000.

In some embodiments, the weight-average molecular weight of the second binder is 800,000 to 1,000,000.

In some embodiments, the first binder includes a structure unit B and a structure unit C. 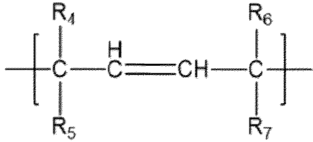 structure unit B 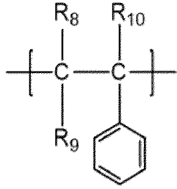 structure unit C

R₄ to R₁₀ are independently selected from hydrogen or C1-C4 alkyl. In some embodiments, the first binder is selected from styrene-butadiene rubber (SBR).

In some embodiments, the second binder includes a structure unit A. 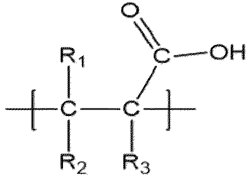 structure unit A

R₁ to R₃ are independently selected from hydrogen or C1-C4 alkyl. In some embodiments, the second binder is selected from polyacrylic acid.

In some embodiments, a mass percentage of the binder is 1% to 10% based on a mass of the negative electrode material layer. In some embodiments, a mass percentage of the binder is 3% to 7% based on a mass of the negative electrode material layer.

In some embodiments, the negative electrode material layer further includes a negative electrode active material, where the negative electrode active material includes a silicon-based material and a carbon-based material. In some embodiments, the silicon-based material is selected from silicon-oxygen compounds and/or silicon-carbon compounds. In some embodiments, the carbon-based material is selected from graphite. In some embodiments, a mass percentage of the silicon-based material is 3% to 70% based on a mass of the negative electrode active material. In some embodiments, a mass percentage of the silicon-based material is 10% to 50%.

In some embodiments, the metal housing is selected from steel housings, aluminum housings, or metal alloy housings. In some embodiments, the metal housing is selected from cylindrical housings or square housings.

A second aspect of this application provides an electronic apparatus. The electronic apparatus includes the secondary battery of the first aspect.

The metal housing of the secondary battery of this application naturally suppresses swelling of a silicon-based material in a cycling procedure, so that rapid cycling degradation and film stripping caused by destruction of a conductive network due to swelling of the silicon-based material can be alleviated to a certain extent. On this basis, the type and the percentage of the binder in the mixed silicon negative electrode are adjusted, solving problems caused by the swelling of the silicon-based material in the mixed silicon negative electrode and improving the capability of lithium deintercalation or intercalation at the negative electrode. In this way, the secondary battery has both high energy density and high cycling performance at a high rate.

### BRIEF DESCRIPTION OF DRAWINGS

FIG. 1 shows cycling curves of secondary batteries of Example 1 and Comparative Example 1 of this application;
FIG. 2 shows cycling curves of secondary batteries of Example 2 and Comparative Example 1 of this application;
FIG. 3 shows cycling curves of secondary batteries of Example 3 and Comparative Example 2 of this application; and
FIG. 4 shows cycling curves of secondary batteries of Example 4 and Comparative Example 2 of this application.

Reference signs: 1. Example 1; 2. Example 2; 3. Example 3; 4. Example 4; 5. Comparative Example 1; and 6. Comparative Example 2.

### DESCRIPTION OF EMBODIMENTS

Some embodiments of this application are described in detail below. Any embodiment of this application should not be construed as a limitation on this application.

In addition, quantities, ratios, and other values are sometimes presented in range formats in this application. It should be understood that such range formats are used for convenience and simplicity and should be flexibly understood as including not only values clearly designated as falling within the ranges but also all individual values or sub-ranges covered by the ranges as if each value and sub-range are clearly designated. In the specific embodiments and claims, a list of items connected by the terms "at least one of", "at least one piece of", "at least one type of", or other similar terms may mean any combination of the listed items. For example, if items A and B are listed, the phrase "at least one of A or B" means only A; only B; or A and B. In another example, if items A, B, and C are listed, the phrase "at least one of A, B, or C" means only A; only B; only C; A and B (exclusive of C); A and C (exclusive of B); B and C (exclusive of A); or all of A, B, and C. The item A may include a single element or a plurality of elements. The item B may include a single element or a plurality of elements. The item C may include a single element or a plurality of elements.

### I. Secondary battery

A secondary battery provided by this application includes a metal housing and an electrode assembly arranged inside the metal housing. The electrode assembly includes a negative electrode. The negative electrode includes a negative electrode material layer. The negative electrode material layer includes a binder. The binder includes a first binder and a second binder, where the first binder is selected from styrene-butadiene rubber polymers and the second binder is selected from polyacrylic acid polymers. A weight-average molecular weight of the first binder is 40,000 to 300,000, and a weight-average molecular weight of the second binder is 400,000 to 2,000,000. A mass percentage of the first binder is 10% to 90% based on a mass of the binder.

In the prior art, a mixed silicon negative electrode increases energy density of a secondary battery, but inevitably intensifies swelling of the negative electrode. To alleviate swelling of a silicon-based material in a cycling procedure, a large amount of polyacrylic acid (PAA) coating binder is typically needed. However, an excessive amount of the coating binder applied on graphite particles in the mixed negative electrode weakens the lithium ion transmission capacity of the graphite particles, affecting cycling performance of the secondary battery at a high rate. Through research, the inventor of this application has found that in a secondary battery such as a cylindrical battery constrained by a metal housing, the metal housing naturally suppresses swelling of silicon in a cycling procedure. On this basis, some styrene-butadiene rubber point contact binder can be used to replace a part of the coating binder based on a percentage of a silicon-based material, so as to reduce the amount of the coating binder applied on graphite particles, which reduces resistance of the binder against lithium ion transmission, thereby improving speeds of lithium deintercalation or intercalation at the negative electrode. In this way, cycling performance of the secondary battery at a high rate is effectively improved while maintaining its energy density.

In some embodiments, based on the mass of the binder, the mass percentage of the first binder is 15%, 20%, 25%, 30%, 33%, 35%, 37%, 40%, 45%, 47%, 50%, 53%, 55%, 57%, 60%, 63%, 65%, 67%, 70%, 75%, 80%, or 85%, or is within a range defined by any two thereof. When the percentage of the first binder is too low, the amount of the binder applied on the graphite particles cannot be effectively reduced, speeds of lithium deintercalation or intercalation at the negative electrode are too low, and cycling performance of the secondary battery at a high rate is relatively low. When the percentage of the first binder is too high, the silicon-based material may swell more during a cycling procedure, which may also affect the cycling performance of the secondary battery. In some embodiments, the mass percentage of the first binder is 20% to 83% based on the mass of the binder. In some embodiments, the mass percentage of the first binder is 20% to 80%. In some embodiments, the mass percentage of the first binder is 40% to 60%.

In some embodiments, the negative electrode material layer further includes a negative electrode active material, where the negative electrode active material includes a silicon-based material and a carbon-based material. In some embodiments, the silicon-based material is selected from silicon-oxygen compounds and/or silicon-carbon compounds. In some embodiments, the silicon-based material includes at least one of a silicon-containing compound, simple substance silicon, or a mixture thereof. In some embodiments, the silicon-based material includes silicon oxide SiOx, where x is 0.6 to 1.5.

In some embodiments, a mass percentage of the silicon-based material is 3% to 70% based on a mass of the negative electrode active material. In some embodiments, a mass percentage of the silicon-based material is 5%, 15%, 20%, 25%, 30%, 35%, 40%, 45%, 50%, 55%, 60%, or 65%, or is within a range defined by any two thereof. In some embodiments, a mass percentage of the silicon-based material is 10% to 50%.

In some embodiments, based on a mass of the negative electrode active material, a mass percentage of the silicon-based material is 3% to 25%, for example, 10% to 25%; and based on the mass of the binder, the mass percentage of the first binder is 40% to 60%, for example, 45%, 50%, or 55%.

In some embodiments, based on a mass of the negative electrode active material, a mass percentage of the silicon-based material is 30% to 70%, for example, 30% to 50%; and based on the mass of the binder, the mass percentage of the first binder is 20% to 40%, for example, 25%, 30%, or 35%.

In some embodiments, the carbon-based material is selected from graphite. In some embodiments, the graphite is selected from artificial graphite and/or natural graphite. In some embodiments, the weight-average molecular weight of the first binder is 60,000, 80,000, 85,000, 90,000, 95,000, 100,000, 120,000, 140,000, 160,000, 180,000, 200,000, 220,000, 240,000, 260,000, or 280,000, or is within a range defined by any two thereof. In some embodiments, the weight-average molecular weight of the first binder is 80,000 to 100,000.

In some embodiments, the weight-average molecular weight of the second binder is 600,000, 800,000, 850,000, 900,000, 950,000, 1,000,000, 1,200,000, 1,400,000, 1,600,000, or 1,800,000, or is within a range defined by any two thereof. In some embodiments, the weight-average molecular weight of the second binder is 800,000 to 1,000,000.

In some embodiments, the first binder includes a structure unit B and a structure unit C. 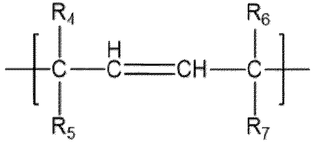 structure unit B 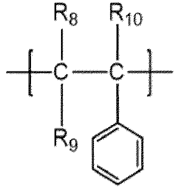 structure unit C

R₄ to R₁₀ are independently selected from hydrogen or C1-C4 alkyl.

In some embodiments, R₄ to R₇ are independently selected from hydrogen, methyl, ethyl, n-propyl, or isopropyl. In some embodiments, R₈ to R₁₀ are independently selected from hydrogen, methyl, ethyl, n-propyl, or isopropyl. In some embodiments, the first binder is selected from styrene-butadiene rubber.

In some embodiments, the second binder includes a structure unit A. 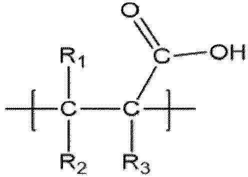 structure unit A

R₁ to R₃ are independently selected from hydrogen or C1-C4 alkyl.

In some embodiments, R₁ to R₃ are independently selected from hydrogen, methyl, ethyl, n-propyl, or isopropyl. In some embodiments, the second binder is selected from polyacrylic acid or methyl polyacrylic acid.

In some embodiments, a mass percentage of the binder is 1% to 10% based on a mass of the negative electrode material layer. In some embodiments, a mass percentage of the binder is 2%, 2.5%, 3%, 3.5%, 4%, 4.5%, 5%, 5.5%, 6%, 6.5%, 7%, 7.5%, 8%, 8.5%, 9%, or 9.5%, or is within a range defined by any two thereof. In some embodiments, a mass percentage of the binder is 3% to 7% based on a mass of the negative electrode material layer.

In some embodiments, the metal housing is selected from aluminum housings or metal alloy housings. In some embodiments, the metal housing is selected from steel housings. In some embodiments, the metal housing is selected from cylindrical housings or square housings. In some embodiments, the secondary battery is a cylindrical battery.

In some embodiments, the negative electrode further includes a negative electrode current collector, where the negative electrode current collector includes a copper foil, an aluminum foil, a nickel foil, a stainless steel foil, a titanium foil, nickel foam, copper foam, a polymer substrate coated with conductive metal, or any combination thereof. In some embodiments, the negative electrode material layer further includes a conductive agent. In some embodiments, the conductive agent includes, but is not limited to, a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

The electrode assembly of this application further includes a positive electrode. The positive electrode includes a positive electrode current collector and a positive electrode material layer, where a positive electrode active layer includes a positive electrode active material, a binder, and a conductive agent.

According to some embodiments of this application, the positive electrode current collector may be a metal foil or a composite current collector. For example, an aluminum foil can be used. A composite current collector may be formed by forming a metal material (copper, copper alloy, nickel, nickel alloy, titanium, titanium alloy, silver, silver alloy, or the like) on a polymer material matrix.

According to some embodiments of this application, the positive electrode active material includes at least one of lithium cobalt oxide, lithium nickel manganese cobalt oxide, lithium nickel manganese aluminate, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel-type lithium manganate, spinel-type lithium nickel manganese oxide, or lithium titanate. In some embodiments, the binder includes a binder polymer, for example, at least one of polyvinylidene fluoride, polytetrafluoroethylene, polyolefin, sodium carboxymethyl cellulose, lithium carboxymethyl cellulose, modified polyvinylidene fluoride, modified SBR, or polyurethane. In some embodiments, a polyolefin binder includes at least one of polyethylene, polypropylene, polyene ester, polyvinyl alcohol, or polyacrylic acid. In some embodiments, the conductive agent includes: a carbon-based material such as natural graphite, artificial graphite, carbon black, acetylene black, Ketjen black, or carbon fiber; a metal-based material such as metal powder or metal fiber of copper, nickel, aluminum, silver or the like; a conductive polymer such as a polyphenylene derivative; or any mixture thereof.

The electrode assembly of this application further includes a separator. The separator used in the secondary battery according to this application is not particularly limited to any material or shape, and may be based on any technology disclosed in the prior art. In some embodiments, the separator includes a polymer or an inorganic substance formed by a material stable to an electrolyte of this application.

For example, the separator may include a substrate layer and a surface treatment layer. The substrate layer is a non-woven fabric, membrane, or composite membrane having a porous structure, and a material of the substrate layer is selected from at least one of polyethylene, polypropylene, polyethylene terephthalate, or polyimide. Specifically, a polypropylene porous membrane, a polyethylene porous membrane, a polypropylene non-woven fabric, a polyethylene non-woven fabric, or a polypropylene-polyethylene-polypropylene porous composite membrane may be selected.

The surface treatment layer is provided on at least one surface of the substrate layer, and the surface treatment layer may be a polymer layer or an inorganic substance layer, or may be a layer formed by a mixed polymer and an inorganic substance. The inorganic substance layer includes inorganic particles and a binder. The inorganic particles are selected from at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is selected from at least one of polyvinylidene fluoride, a vinylidene fluoride-hexafluoropropylene copolymer, polyamide, polyacrylonitrile, polyacrylic ester, polyacrylic acid, polyacrylate, polyvinylpyrrolidone, polyethylene alkoxy, polymethyl methacrylate, polytetrafluoroethylene, or polyhexafluoropropylene. The polymer layer includes a polymer, and a material of the polymer is selected from at least one of polyamide, polyacrylonitrile, an acrylate polymer, polyacrylic acid, polyacrylate, polyvinylpyrrolidone, polyethylene alkoxy, polyvinylidene fluoride, or poly (vinylidene fluoride-hexafluoropropylene).

The secondary battery of this application further includes an electrolyte. An electrolyte applied to this application may be an electrolyte known in the prior art.

According to some embodiments of this application, the electrolyte includes an organic solvent, lithium salt, and an optional additive. The organic solvent in the electrolyte of this application may be any organic solvent known in the prior art that can be used as a solvent of an electrolyte. An electrolytic salt used in the electrolyte according to this application is not limited, and it may be any electrolytic salt known in the prior art. The additive of the electrolyte according to this application may be any additive known in the prior art that can be used as an additive of an electrolyte. In some embodiments, the organic solvent includes, but is not limited to, ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, for example, at least one of 1,3-dioxolane (DOL) or ethylene glycol dimethyl ether (DME). In some embodiments, the lithium salt includes at least one of organic lithium salt or inorganic lithium salt. In some embodiments, the lithium salt includes, but is not limited to: lithium hexafluorophosphate (LiPF₆), lithium tetrafluoroborate (LiBF₄), lithium difluorophosphate (LiPO₂F₂), lithium difluoromethane sulfonamide LiN (CF₃SO₂)₂ (LiTFSI), lithium bis (fluorosulfonyl) imine Li (N(SO₂F)₂) (LiFSI), lithium bis(oxalate)borate LiB (C₂O₄)₂ (LiBOB), or lithium difluorooxalate borate LiBF₂ (C₂O₄) (LiDFOB). In some embodiments, the additive includes at least one of fluoroethylene carbonate or adiponitrile.

In some embodiments, the secondary battery of this application includes, but is not limited to, a lithium-ion battery or a sodium-ion battery. In some embodiments, the secondary battery includes a lithium-ion battery.

### II. Electronic apparatus

This application further provides an electronic apparatus. The electronic apparatus includes the secondary battery of the first aspect of this application.

The electronic device or apparatus in this application is not particularly limited. In some embodiments, the electronic device in this application includes, but is not limited to: a notebook computer, a pen-input computer, a mobile computer, an electronic book player, a portable phone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power supply, a motor, an automobile, a motorcycle, an assisted bicycle, a bicycle, a lighting appliance, a toy, a game console, a clock, an electric tool, a flashlight, a camera, a large household battery, a lithium-ion capacitor, or the like.

In the following examples and comparative examples, all reagents, materials, and instruments used are commercially available, unless otherwise specified.

### Examples and comparative examples

### Example 1

### <Manufacturing of negative electrode plate>

A negative electrode active material (15wt% silicon material SiO and 85wt% graphite), a binder (50wt% PAA and 50wt% SBR), and other components (conductive agent and dispersant) were mixed at a mass ratio of 94.1wt%:Swt%:0.9wt%. Deionized water was added to the obtained negative electrode slurry composition. Under working of a vacuum mixer (the PAA was added before high-speed dispersion, and the SBR was added after the high-speed dispersion), a negative electrode slurry was obtained with a solid content of 38%. The negative electrode slurry was evenly applied onto one surface of a negative electrode current collector copper foil having a thickness of 8 µm, and the copper foil was dried at 85°C to obtain a negative electrode plate having a coating thickness of 30 µm and with one surface coated with a negative electrode material layer. The foregoing steps were repeated on another surface of the negative electrode current collector to obtain a negative electrode plate with two surfaces coated with the negative electrode material layer. The negative electrode plate then underwent cold pressing for later use.

### <Manufacturing of positive electrode plate>

Positive electrode active materials lithium nickel cobalt manganese oxide, conductive carbon black, and binder polyvinylidene fluoride were mixed at a mass ratio of 96.7:1.7:1.6. Then N-methylpyrrolidone (NMP) was added to obtain a positive electrode slurry with a solid content of 76wt% under working of the vacuum mixer. The positive electrode slurry was evenly applied onto one surface of a positive electrode current collector aluminum foil having a thickness of 10 µm, and the aluminum foil was dried at 120°C to obtain a positive electrode plate having a coating thickness of 45 µm and with one surface coated with a positive electrode material layer. The foregoing steps were repeated on another surface of the aluminum foil to obtain a positive electrode plate with two surfaces coated with the positive electrode material layer. The positive electrode plate then underwent cold pressing for later use.

### <Preparation of electrolyte>

In a dry argon atmosphere glove box, propylene carbonate, ethylene carbonate, and diethyl carbonate were mixed at a mass ratio of 1:1:1 to obtain an organic solvent, and then lithium salt LiPF₆ was added to and dissolved in the organic solvent. The foregoing substances were evenly mixed to obtain an electrolyte. A concentration of LiPF₆ in the electrolyte was 1 mol/L.

### <Manufacturing of separator>

A porous polyethylene film (provided by Celgard) having a thickness of 7 µm and a pore size of 0.1 µm was used. A surface of a separator was coated with a polyacrylate binder layer having a coating mass of 10 ± 2 mg/5000 mm² and a thickness of 3 ± 1 µm.

### <Manufacturing of cylindrical lithium-ion battery>

The positive electrode plate, the separator, and the negative electrode plate were sequentially stacked so that the separator was located between the positive electrode plate and the negative electrode plate to provide separation. Then the resulting stack was wound to obtain an electrode assembly. The electrode assembly was placed into a cylindrical steel housing, and then the electrolyte was injected into the housing. Processes such as standing, formation, grading, and K value testing were then performed to obtain a lithium-ion cylindrical battery.

### Examples 2 to 11 and Comparative Examples 1 and 2

These examples were the same as Example 1 except that the related parameters were adjusted according to Table 1.

### Test methods

### 1. Binder composition and percentage test

Composition of a binder may be detected using infrared spectrum detection (FTIR) and nuclear magnetic resonance (NMR).

A percentage of a binder can be detected using thermogravimetric analysis-mass spectrometry (TG-MS).

### 2. Lithium-ion battery cycling performance test

At a test temperature of 25°C, the battery was charged to 4.25 V at a constant current of 2C, constant-voltage charged to 0.025C, left standing for 5 minutes, and then discharged to 2.5 V at 7C. A capacity obtained in this cycle was the initial capacity.

Then, a 2C charge and 7C discharge cycling test was performed. A ratio of the capacity of each cycle to the initial capacity was calculated to obtain a capacity degradation curve. Capacity retention rate after n cycles = (discharge capacity of the nth cycle/discharge capacity of the first cycle) × 100%.

### 3. Lithium-ion battery energy density

At a room temperature (25°C ± 2°C), the lithium-ion battery was left standing for not less than 30 minutes, charged to the upper limit specified upon delivery (charging duration not more than 8 h) using the charging method specified upon delivery, and then left standing for not less than 30 minutes. Discharge energy E (in Wh) was measured. Then, a micrometer or a vernier caliper was used to measure the maximum diameter and height of the lithium-ion battery to calculate a volume V (in L). Discharge volumetric energy density VED (Wh/L) of the battery = E/V.

### Test results

**Table 1**

| Example and comparative example | Negative electrode material layer | | | | | | | Lithium-ion battery | |
|---|---|---|---|---|---|---|---|---|---|
| | Type and percentage of negative electrode active material (based on total mass of negative electrode active material) | Type and percentage of binder (based on total mass of binder) | Molecular weight of styrene-butadiene rubber | Molecular weight of polyacrylic acid | Amount of added binder (based on negative electrode slurry composition) | Percentage of styrene-butadiene rubber (wt%) | Percentage of polyacrylic acid (wt%) | Capacity retention rate after 50 cycles | Volumetri c energy density (W/L) |
| Example 1 | 15wt% SiO + 85wt% graphite | 50wt% styrene-butadiene rubber + 50wt% polyacrylic acid | 85,000 | 920,000 | 5wt% | 2.5 | 2.5 | 96% | 690 |
| Example 2 | 15wt% SiO + 85wt% graphite | 20wt% styrene-butadiene rubber + 80wt% polyacrylic acid | 85,000 | 920,000 | 5wt% | 1.0 | 4.0 | 89% | 690 |
| Example 3 | 30wt% SiO + 70wt% graphite | 50wt% styrene-butadiene rubber + 50wt% polyacrylic acid | 85,000 | 920,000 | 5wt% | 2.5 | 2.5 | 88% | 740 |
| Example 4 | 30wt% SiO + 70wt% graphite | 20wt% styrene-butadiene rubber + 80wt% polyacrylic acid | 85,000 | 920,000 | 5wt% | 1.0 | 4.0 | 92% | 740 |
| Example 5 | 15wt% SiO + 85wt% graphite | 80wt% styrene-butadiene rubber + 20wt% polyacrylic acid | 85,000 | 920,000 | 5wt% | 4.0 | 1.0 | 95% | 690 |
| Example 6 | 15wt% SiO + 85wt% graphite | 90wt% styrene-butadiene rubber + 10wt% polyacrylic acid | 85,000 | 920,000 | 5wt% | 4.5 | 0.5 | 93% | 690 |
| Example 7 | 15wt% SiO + 85wt% graphite | 10wt% styrene-butadiene rubber + 90wt% polyacrylic acid | 85,000 | 920,000 | 5wt% | 0.5 | 4.5 | 80% | 690 |
| Example 8 | 15wt% SiO + 85wt% graphite | 50wt% styrene-butadiene rubber + 50wt% polyacrylic acid | 240,000 | 1,800,000 | 5wt% | 2.5 | 2.5 | 74% | 690 |
| Example 9 | 15wt% SiO + 85wt% graphite | 50wt% styrene-butadiene rubber + 50wt% polyacrylic acid | 50,000 | 1,800,000 | 5wt% | 2.5 | 2.5 | 72% | 690 |
| Example 10 | 15wt% SiO + 85wt% graphite | 50wt% styrene-butadiene rubber + 50wt% polyacrylic acid | 240,000 | 500,000 | 5wt% | 2.5 | 2.5 | 80% | 690 |
| Example 11 | 15wt% SiO + 85wt% graphite | 50wt% styrene-butadiene rubber + 50wt% polyacrylic acid | 50,000 | 500,000 | 5wt% | 2.5 | 2.5 | 78% | 690 |
| Comparative Example 1 | 15wt% SiO + 85wt% graphite | 100wt% polyacrylic acid | / | 920,000 | 5wt% | 0 | 5.0 | 68% | 690 |
| Comparative Example 2 | 30wt% SiO + 70wt% graphite | 100wt% polyacrylic acid | / | 920,000 | 5wt% | 0 | 5.0 | 67% | 740 |

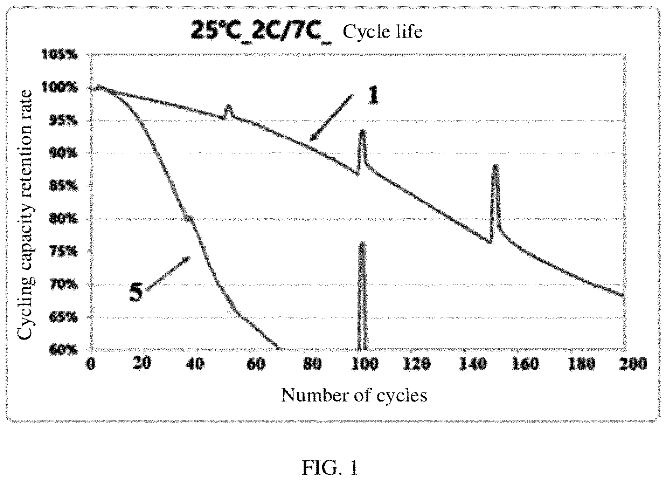

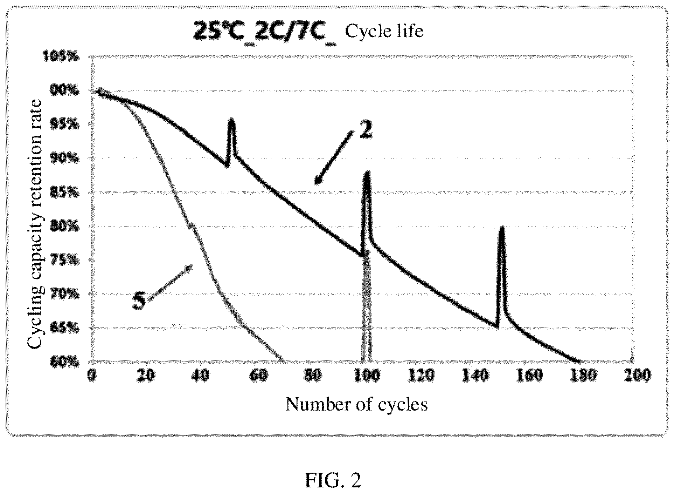

It can be learned from FIG. 1 and data of Comparative Example 1 and Example 1 in Table 1 that the binder used in Comparative Example 1 is a 100% coating binder (PAA). In a high-rate charge-discharge (2C and 7C) cycle at 25°C, the lithium ion transmission capacity of the surface of the graphite material is weakened by applying an excessive amount of PAA on graphite particles, which affects speeds of lithium deintercalation or intercalation at the negative electrode, leading to excessively rapid cycling capacity degradation at a high rate. In Example 1, the 50% point contact binder SBR is used to partially replace the PAA, so that an area of the particle surface of the graphite material coated with the binder is reduced, which increases the speeds of lithium deintercalation or intercalation at the negative electrode, thereby improving cycling performance at a high rate. In Example 2, a ratio of the PAA to the SBR is adjusted. FIG. 2 shows the cycling performance comparison of the lithium-ion batteries in Example 2 and Comparative Example 1: the cycling performance at a high rate is also significantly improved.

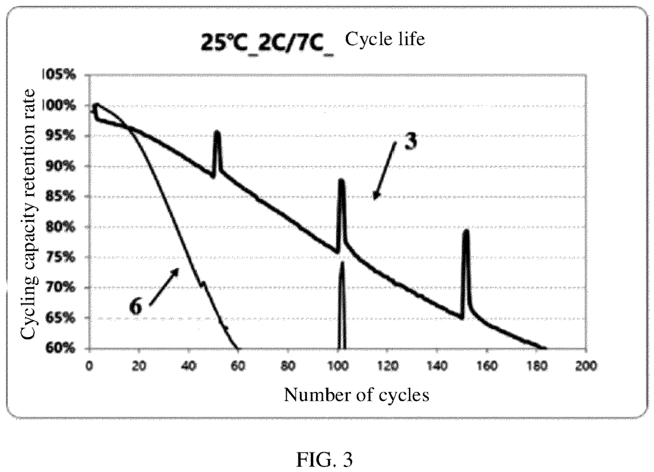

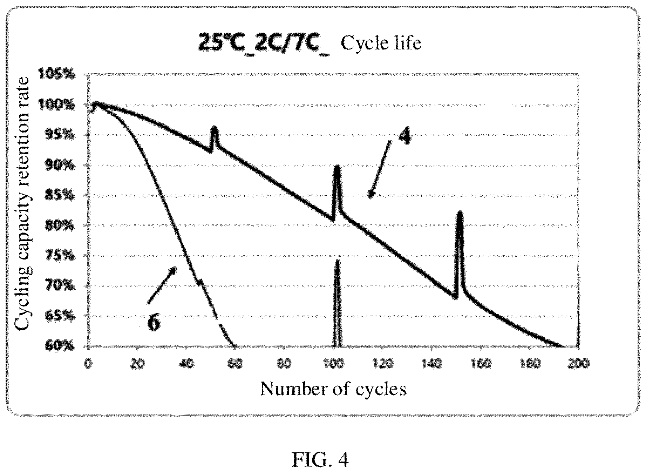

In Example 4 and Example 5, a mixing percentage of the silicon-based material is changed. FIG. 3 and FIG. 4 show cycling performance comparison between Example 4 and Comparative Example 2 and between Example 5 and Comparative Example 2. Similarly, compared with Comparative Example 2, the coating binder (PAA) and the point contact binder (SBR) at a different ratio are used, which reduces the amount of coating binder applied on the graphite particles, thereby improving the capability of lithium deintercalation or intercalation at the negative electrode and significantly improving cycling performance at a high rate.

Although some exemplary embodiments of this application have been illustrated and described, this application is not limited to the disclosed embodiments. On the contrary, persons skilled in the art can realize that some modifications and changes may be made to the described embodiments without departing from the spirit and scope of this application described in the appended claims.

## Claims

1. A secondary battery, comprising a metal housing and an electrode assembly arranged inside the metal housing, wherein the electrode assembly comprises a negative electrode, the negative electrode comprising a negative electrode material layer, the negative electrode material layer comprising a binder, and the binder comprising a first binder and a second binder; **characterized in that**, the first binder is selected from styrene-butadiene rubber polymers and the second binder is selected from polyacrylic acid polymers;
wherein, a weight-average molecular weight of the first binder is 40,000 to 300,000; a weight-average molecular weight of the second binder is 400,000 to 2,000,000; and a mass percentage of the first binder is 10% to 90% based on a mass of the binder.

2. The secondary battery according to claim 1, **characterized in that**, the mass percentage of the first binder is 20% to 80% based on the mass of the binder.

3. The secondary battery according to claim 1 or 2, **characterized in that**, the mass percentage of the first binder is 40% to 60% based on the mass of the binder.

4. The secondary battery according to any one of claims 1 to 3, **characterized in that**, the weight-average molecular weight of the first binder is 80,000 to 100,000; and/or
the weight-average molecular weight of the second binder is 800,000 to 1,000,000.

5. The secondary battery according to any one of claims 1 to 4, **characterized in that**, the first binder comprises a structure unit B and a structure unit C; and the second binder comprises a structure unit A, 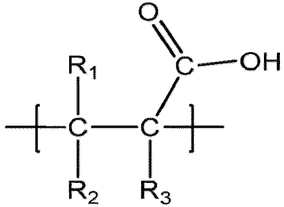 structure unit A, 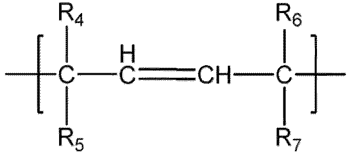 structure unit B, 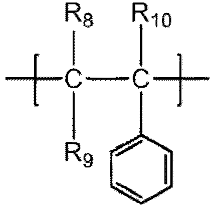 structure unit C, wherein R₁ to R₁₀ are independently selected from hydrogen or C1-C4 alkyl.

6. The secondary battery according to any one of claims 1 to 5, **characterized in that**, the first binder is styrene-butadiene rubber and the second binder is polyacrylic acid; and/or
a mass percentage of the binder is 1% to 10% based on a mass of the negative electrode material layer.

7. The secondary battery according to any one of claims 1 to 6, **characterized in that**, a mass percentage of the binder is 3% to 7% based on a mass of the negative electrode material layer.

8. The secondary battery according to any one of claims 1 to 7, **characterized in that**, the negative electrode material layer further comprises a negative electrode active material, the negative electrode material comprising a silicon-based material and a carbon-based material; wherein the silicon-based material is selected from silicon-oxygen compounds and/or silicon-carbon compounds; and the carbon-based material is graphite.

9. The secondary battery according to claim 8, **characterized in that**, a mass percentage of the silicon-based material is 3% to 70% based on a mass of the negative electrode active material.

10. The secondary battery according to claim 8 or 9, **characterized in that**, a mass percentage of the silicon-based material is 10% to 50% based on a mass of the negative electrode active material.

11. The secondary battery according to any one of claims 1 to 10, **characterized in that**, the metal housing is selected from aluminum housings or metal alloy housings; and/or
the metal housing is selected from cylindrical housings or square housings.

12. The secondary battery according to any one of claims 1 to 11, **characterized in that**, the metal housing is a steel housing.

13. An electronic apparatus, comprising the secondary battery according to any one of claims 1 to 12.
